# EUROPÄISCHE PATENTSCHRIFT

(11) **EP 2 064 116 B1**
(45) Veröffentlichungstag und Bekanntmachung des Hinweises auf die Patenterteilung: **23.07.2014**
(21) Anmeldenummer: 07802322.3
(22) Anmeldetag: 15.09.2007
(51) Int. Cl.: B64C 23/06, B64C 5/10, B64C 13/16

(54) **AERODYNAMISCHER KÖRPER SOWIE TRAGFLÜGEL MIT AERODYNAMISCHEM KÖRPER ZUR BEEINFLUSSUNG VON NACHLAUFWIRBELN**
AERODYNAMIC BODY AND CARRIER WING COMPRISING AN AERODYNAMIC BODY FOR INFLUENCING POST-TURBULENCES
CORPS AÉRODYNAMIQUE ET AILE PORTANTE PRÉSENTANT UN CORPS AÉRODYNAMIQUE D'INFLUENCE DE POST-TURBULENCES

(30) Priorität: 15.09.2006 DE 102006043469
(43) Veröffentlichungstag der Anmeldung: 03.06.2009
(73) Patentinhaber: Airbus Operations GmbH, 21129 Hamburg (DE); Technische Universität München, 80333 München (DE)
(72) Erfinder: BREITSAMTER, Christian, 85652 Landsham (DE); ALLEN, Alexander, 85051 Ingolstadt (DE)
(74) Vertreter: UEXKÜLL & STOLBERG
(86) Internationale Anmeldenummer: PCT/EP2007/008038
(87) Internationale Veröffentlichungsnummer: WO 2008/031620

(56) Entgegenhaltungen:
- WO-A-99/00297
- DE-A1- 2 149 956
- DE-U1- 20 211 664
- GB-A- 850 249
- US-A- 2 846 165
- US-A- 3 174 030
- US-A- 3 462 662
- US-A- 3 561 326
- US-A- 4 010 409
- US-A- 4 197 655
- US-A- 5 988 563

## Beschreibung

Die Erfindung betrifft einen aerodynamischen Körper zur Anbringung an einen Tragflügel und einen Tragflügel mit einem Haupttragflügel und zumindest einem solchen zusätzlichen aerodynamischen Körper.

US 2 846 165 A, die den nächstliegenden Stand der Technik Offenbart und den Oberbegriff des unabhängigen Anspruchs 1 darstellt, sowie DE 202 11 664 U1, DE 21 49 956 A1 und US 5 998 563 A offenbaren jeweils einen an einem Tragflügel angeordneten aerodynamischen Körper, der sich mit seiner Längsrichtung winklig zu der Spannweitenrichtung des Flügels erstreckt.

Weiterhin offenbart die US 3 462 662 einen Computer mit einem Stellantriebs-Ansteuermodul, das zeitveränderliche Kommandosignale für Stellantriebe generiert, wobei das Stellantriebs-Ansteuermodul eine Funktion aufweist, die aufgrund ihrer Aktivierung zumindest zwei oszillatorische Kommandosignale an jeweils einen Stellantrieb generiert.Luftfahrzeuge verursachen Nachlaufwirbelsysteme, sogenannte Wirbelschleppen, aufgrund von Druckunterschieden zwischen der Oberseite des Flügels mit niedrigem Druckniveau und der Unterseite mit hohem Druckniveau des Flügels. An den Enden des Flügels strömt daher Luft von der Unterseite des Flügels zu dessen Oberseite, wobei ein Wirbel (Flügelspitze- oder Randwirbel) entsteht. Ferner fließen an der Hinterkante der Tragfläche von Ober- und Unterseite kommende Fluidschichten mit unterschiedlichem Richtungssinn aneinander vorbei, so dass eine freie Scherschicht entsteht, die in Spannweitenrichtung mit dem jeweiligen Randwirbel verbunden ist. Diese freie Scherschicht rollt sich infolge der Eigeninduktion zusammen mit dem jeweiligen Randwirbel in zwei gegensinnig drehende Einzelwirbel auf, die in ihrem Kern je nach Flugzustand und Flugzeuggröße Spitzengeschwindigkeiten von bis zu 360 km/h aufweisen können.

Das Nachlaufwirbelsystem bleibt bis zu mehreren hundert Spannweiten stromab des Flugzeugs nachweisbar, bevor es sich infolge von Instabilitätsmechanismen und/oder durch atmosphärische Effekte auflöst. Dadurch kann die Wirbelschleppe bei Großflugzeugen beispielsweise eine Lebensdauer von mehreren Minuten und eine Länge von bis zu 30 km aufweisen. Bei Hochauftriebskonfigurationen des Flugzeugs, d.h. insbesondere bei Start und Landung, mit ausgefahrenen Vorflügel- und Hinterkantenklappen, treten weitere energiereiche Wirbel auf. Insbesondere entstehen an den äußeren seitlichen Klappenrändern weitere Wirbel, die in ihrer Intensität die Flügelspitzenwirbel übertreffen können.

Ein nachfolgendes, in eine Wirbelschleppe einfliegendes Flugzeug erfährt je nach Position im Wirbelfeld eine Beaufschlagung durch ein Aufwindfeld, ein Abwindfeld (Auftriebsverlust) oder ein induziertes Rollmoment, verbunden mit mehr oder weniger starken Geschwindigkeitsschwankungen. Insbesondere für ein gegenüber dem vorausfliegenden Flugzeug nachfolgendes kleineres Flugzeug können sich dadurch schwerwiegende Konsequenzen ergeben. Diese äußern sich in einer erhöhten strukturdynamischen Belastung bis hin zum Verlust der stabilen Fluglage, wenn beispielsweise das kommandierte Rollmoment nicht mehr ausreicht, das von der Wirbelschleppe induzierte Rollmoment auszugleichen.

Da die Stärke der nach dem Aufrollvorgang verbleibenden beiden Einzelwirbel proportional zur Gesamtzirkulation und damit zum Auftrieb ist, welcher der Gewichtskraft des Flugzeugs entgegenwirkt, richten sich die Sicherheitsabstände zwischen zwei aufeinanderfolgenden Flugzeugen nach deren maximalem Abfluggewicht (Abflugmasse).

Zur Abminderung des Gefährdungspotenzials für nachfolgende Flugzeuge ist es aus dem allgemeinen Stand der Technik bekannt, die räumliche Wirbelstärkeverteilung im Nachlauf zu beeinflussen und damit das induzierte Rollmoment zu verringern oder inhärente Instabilitätsmechanismen der Wirbelsysteme auszunutzen und auszulösen, um einen beschleunigten Zerfall der Wirbelschleppe zu verursachen.

Aus der US 6,082,679 B1 ist beispielsweise ein Verfahren zum Auswählen von Steuerparametern eines aktiven Steuersystems für die frühzeitige Zerstörung von Wirbelschleppen mittels einer Bewegung von Tragflächensteuerflächen wie Querrudern und Spoilern bekannt. Gemäß dieser Lösung wird die Nahfeld-Verwirbelungsverteilung des Tragflügels erfasst und ein Verstärkungsmechanismus zur Veränderung der Wirbelschleppe ausgewählt. Anschließend werden Amplituden und Wellenlängen der auferlegten Wirbelstörungen bestimmt und die Entwicklung der Wirbelschleppe simuliert sowie die Wirbelposition als eine Funktion von Steuerflächenauslenkungen ermittelt. Anhand der Simulation und der Wirbelposition als Funktion der Steuerflächenauslenkungen werden Steuerparameter zur Bewegung der Tragflächensteuerflächen bestimmt.

Nachteilig bei derartigen Systemen ist, dass diese aufgrund der Verwendung von am Flugzeug bereits vorhandenen Steuerflächen, wie beispielsweise Querrudern und Störklappen eine Überlagerung der eigentlichen Funktionalität, beispielsweise der Rollsteuerung, verursachen. Diese Multifunktionalität führt zu einem erheblichen Mehraufwand hinsichtlich der aeroelastischen Analyse und des Flugsteuerungssystems.

Der Erfindung liegt die Aufgabe zugrunde, einen aerodynamischen Körper sowie einen Tragflügel mit einem aerodynamischen Körper zu schaffen, bei denen ein beschleunigter Wirbelschleppenzerfall bei minimalem verfahrenstechnischem Aufwand ermöglicht ist.

Diese Aufgabe wird mit den Merkmalen des unabhängigen Anspruchs 1 gelöst. Weitere Ausführungsformen sind in den auf diese rückbezogenen Unteransprüchen angegeben.

Erfindungsgemäß ist ein aerodynamischer Körper zur Anbringung an einen Tragflügel, der sich in seiner Längsrichtung winklig zu der Spannweitenrichtung des Haupttragflügels erstreckt, wobei am stromabwärtigen Ende des aerodynamischen Körpers zumindest zwei in Längsrichtung des aerodynamischen Körpers nebeneinander angeordnete Strömungsklappen angeordnet sind.

Am aerodynamischen Körper kann insbesondere eine geradzahlige oder ungeradzahlige Anzahl von in Längsrichtung desselben nebeneinander angeordneten Strömungsklappen angeordnet sein.

Die Größen von zumindest zwei der aerodynamischen Körper können so gewählt sein, dass sich bei phasenverschobener Oszillation von zumindest zwei der Strömungsklappen die durch diese bewegungsinduzierten Luftkräfte zu jedem Zeitpunkt unter 10 % der maximalen von einer der Strömungsklappen induzierbaren Luftkraft ist. Die Größen von zumindest zwei der aerodynamischen Körper können so gewählt sein, dass sich bei gegenphasiger Oszillation von zumindest zwei der Strömungsklappen die durch diese aerodynamischen Körper bewegungsinduzierten Luftkräfte zu jedem Zeitpunkt der Schwingungsperiode gerade aufheben.

Am aerodynamischen Körper können insbesondere zwei Strömungsklappen in Längsrichtung desselben nebeneinander angeordnet sein.

Generell können die am aerodynamischen Körper angeordneten Strömungsklappen direkt nebeneinander angeordnet sein.

Den Strömungsklappen des aerodynamischen Körpers kann insgesamt zumindest ein Stellantrieb zugeordnet sein, der mehrere oder jede der Strömungsklappen von einer Nullstellung verstellen kann. In einer speziellen Ausführungsform können dabei zumindest zwei der Strömungsklappen des aerodynamischen Körpers miteinander mechanisch gekoppelt sein und mit diesen Strömungsklappen ein Stellantrieb zu deren Betätigung derart gekoppelt sein, dass eine Betätigungsbewegung des Stellantriebs gleichzeitig phasenverschobene Bewegungen der Strömungsklappen oder gegenphasige Bewegungen bewirkt. Alternativ kann jeder der Strömungsklappen des aerodynamischen Körpers jeweils ein Stellantrieb zugeordnet sein, der jeden der Strömungsklappen von einer Referenzstellung ausgehend in beide entgegengesetzt zueinander verlaufenden Richtungen verstellen kann.

Die Referenzstellung kann die Neutralstellung der jeweiligen Strömungsklappe am aerodynamischen Körper oder auch eine Stellung der jeweiligen Strömungsklappe am aerodynamischen Körper sein, bei der der Widerstand des aerodynamischen Körpers maximal 10 % des minimalen Widerstandswertes ist.

Erfindungsgemäß ist insbesondere vorgesehen, dass die am aerodynamischen Körper angeordneten Strömungsklappen Klappenausschläge ausgehend von der Referenzstellung zwischen 10 Grad und 40 Grad und vorzugsweise zwischen 15 Grad und 25 Grad in beiden Richtungen ausführen.

Der aerodynamische Körper kann ein an der Spitze des Hauptflügels angeordnetes Winglet oder im Bereich zwischen der Flügelwurzel und der Flügelspitze des Hauptflügels angeordnet sein. Der Winkel zwischen der Längsrichtung des aerodynamischen Körpers und der Spannweitenrichtung des Haupttragflügels kann insbesondere 90 Grad betragen oder zwischen 45 Grad und 90 Grad liegen.

Erfindungsgemäß ist weiterhin ein Tragflügel mit einem Haupttragflügel und zumindest einem zusätzlichen aerodynamischen Körper vorgesehen, der nach den voranstehenden Eigenschaften gestaltet ist. Insbesondere kann zur Betätigung der zumindest zwei Strömungsklappen im aerodynamischen Körper zumindest ein Stellantrieb oder für jede Strömungsklappe jeweils ein Stellantrieb angeordnet sein. Zusätzlich kann im aerodynamischen Körper ein Computer zur Ansteuerung des zumindest einen Stellantriebs angeordnet ist.

Ein Computer mit einem Stellantriebs-Ansteuermodul kann vorgesehen sein, das zeitveränderliche Kommandosignale für Stellantriebe generiert, wobei das Stellantriebs-Ansteuermodul eine Funktion aufweist, die aufgrund ihrer Aktivierung zumindest zwei oszillatorische Kommandosignale generiert, von denen jedes jeweils einen Stellantrieb kommandiert, wobei die oszillatorischen Kommandosignale zueinander gegenphasig sind. Auch kann ein Computer mit einem Stellantriebs-Ansteuermodul vorgesehen sein, das zeitveränderliche Kommandosignale zur Übermittlung an zumindest einen Stellantrieb generiert, wobei das Stellantriebs-Ansteuermodul eine Funktion aufweist, die aufgrund ihrer Aktivierung zumindest drei oszillatorische Kommandosignale an jeweils einen Stellantrieb generiert, von denen jedes jeweils einen Stellantrieb kommandiert, wobei die oszillatorischen Kommandosignale zueinander phasenverschoben sind.

Dabei kann das Stellantriebs-Ansteuermodul eine Funktion zur Veränderung der Frequenz und/oder Amplitude des oszillatorischen Kommandosignals aufweisen. Die Funktion zur Veränderung der Frequenz und/oder Amplitude der oszillierenden Kommandosignale kann eine Rampenfunktion aufweisen, die die Frequenz und/oder Amplitude in einem vorgegebenen Zeitabschnitt kontinuierlich erhöht oder absenkt. Die Funktion zur Veränderung der Frequenz und/oder Amplitude der oszillierenden Kommandosignale kann alternativ oder zusätzlich einen Zufallsgenerator aufweisen, der die Frequenz und/oder Amplitude für einen vorgegebenen Zeitabschnitt oder der Frequenzen und/oder Amplituden für einen vorgegebenen Zeitabschnitt festsetzt. Der Zufallsgenerator kann dabei auch zusätzlich die Größe des Zeitabschnitts festlegen.

Generell kann die Funktion zur Veränderung der Frequenz der oszillierenden Kommandosignale ein weißes Rauschen erzeugen und dieses dem oszillierenden Kommandosignal aufschalten.

Auch können in den genannten Fällen die Frequenzen innerhalb einer vorgegebenen Bandbreite in einem vorgegebenen Zeitabschnitt nach einer Normalverteilung erzeugt werden.

Weiterhin kann auch ein Computerprogramm nicht beansprucht zur Implementierung in einen Computer mit einem Stellantriebs-Ansteuermodul vorgesehen sein, der eine voranstehend beschriebene Funktion aufweist.

Auch kann auch vorgesehen sein: eine Kombination aus einem Computer mit einem Stellantriebs-Ansteuermodul und zumindest einem Stellantrieb zur Ansteuerung eines Klappenpaares, wobei der Computer nach einer der voranstehend beschriebenen Alternativen gebildet ist; eine Kombination aus einem Computer mit einem Stellantriebs-Ansteuermodul, einem aerodynamischen Körper und zumindest einem Stellantrieb zur Ansteuerung eines Klappenpaares, wobei der aerodynamische Körper nach einer der voranstehend beschriebenen Alternativen gebildet ist; eine Kombination aus einem Computer mit einem Stellantriebs-Ansteuermodul, Tragflügel und zumindest einem Stellantrieb, wobei der Tragflügel nach einer der voranstehend beschriebenen Alternativen gebildet ist.

Weiterhin kann ein Verfahren nicht beanspricht zur Beeinflussung von Kommandosignalen für ein Stellantriebssystem mit den folgenden Schritten vorgesehen sein:
■ Erzeugung von Ansteuerungssignalen für einen Stellantrieb,
■ Veränderung der Ansteuerungssignale derart, dass zumindest zwei oszillatorische Kommandosignale für jeweils einen Stellantrieb generiert werden, die zueinander gegenphasig sind.

Bei dem Verfahren können zumindest zwei oszillatorische Kommandosignale für jeweils einen Stellantrieb generiert werden, die zueinander phasenverschoben sind.

Bei dem Verfahren kann nach oder vor Erzeugung der oszillatorischen Kommandosignale die Frequenz und/oder Amplitude jedes oszillatorischen Kommandosignals verändert werden. Dabei kann die Veränderung der Frequenz und/oder Amplitude der oszillierenden Kommandosignale durch eine Rampenfunktion vorgenommen werden, die die Frequenz und/oder Amplitude in einem vorgegebenen Zeitabschnitt kontinuierlich erhöht oder absenkt.

Weiterhin kann bei dem Verfahren zur Beeinflussung von Kommandosignalen die Veränderung der Frequenz und/oder Amplitude der oszillierenden Kommandosignale durch einen Zufallsgenerator vorgenommen werden, der die Frequenz und/oder Amplitude für einen vorgegebenen Zeitabschnitt oder der Frequenzen und/oder Amplituden für einen vorgegebenen Zeitabschnitt festsetzt. Der Zufallsgenerator kann dabei zusätzlich die Größe des Zeitabschnitts festlegen.

Die Funktion zur Veränderung der Frequenz und/oder Amplitude der oszillierenden Kommandosignale des erfindungsgemäßen Verfahrens kann bei den genannten Alternativen ein weißes Rauschen erzeugt und dieses dem oszillierenden Kommandosignal aufschaltet.

Alternativ oder zusätzlich können die Frequenzen und/oder die Amplituden innerhalb einer vorgegebenen Bandbreite in einem vorgegebenen Zeitabschnitt nach einer Normalverteilung erzeugt werden.

Bei dieser Lösung werden Störgeschwindigkeiten erzeugt, die zu einer gegenüber dem unbeeinflussten Fall frühzeitigeren Einleitung der Destabilisierung des Hauptwirbels großer Transportflugzeuge und damit zur Beschleunigung des Wirbelschleppenzerfalls führen. Durch die frequenzkonditionierten Störungen wird ein beschleunigter Zerfall erreicht, da die erzeugten frequenzspezifischen Geschwindigkeitsfluktuationen infolge des Aufrollvorgangs in den Hauptwirbel eingebracht werden und dort das Niveau von bereits vorhandenen Anfangsstörungen verstärken, die zur Ausbildung inhärenter Instabilitätsformen und schließlich zum Zerfall des gesamten Wirbelsystems führen.

Zur Destabilisierung des aus dem Aufrollvorgang des Nachlaufwirbelsystems einer Flugzeugkonfiguration resultierenden Hauptwirbels nach der Erfindung werden Steuerflächen oder Klappen, vorzugsweise zumindest zwei Klappen, an einem gegenüber der Flügelebene geneigten aerodynamischen Körper und insbesondere an einer Hinterkante des aerodynamischen Körpers, z.B. in Form eines Winglets, angeordnet.

Bei einer besonders bevorzugten Ausführungsform der Erfindung hat der aerodynamische Körper zwei Winglet-Klappen oder eine geradzahlige Anordnung von mehr als zwei Winglet-Klappen, die jeweils eine gegenphasige Bewegung durchführen. Die gegenphasige Oszillation der Klappen verhindert die zeitliche Änderung der integralen aerodynamischen Reaktionen, so dass die resultierenden Luftkräfte im Wesentlichen aufgehoben sind.

Die Frequenzen der harmonischen Klappenschwingungen sind bei einer bevorzugten Ausführung der Erfindung auf die dem Nachlaufwirbelsystem inhärenten Instabilitätsformen mit der größten Anfachungsrate abgestimmt.

Mit den Strömungsklappen gemäß der Erfindung ist eine Beeinflussung des Nachlaufwirbelsystems möglich, ohne in die Funktionalität bereits vorhandener Steuerflächen, wie Querruder oder Spoiler, einzugreifen. Eine mehrteilige Ausführung der Klappen, d.h. da Vorsehen mehrerer Strömungsklappen an einem aerodynamischen Körper gewährleistet die Konstanz der aerodynamischen Gesamtbeiwerte, was hinsichtlich der Flugeigenschaften eine wesentliche Voraussetzung für eine praktische Umsetzung darstellt.

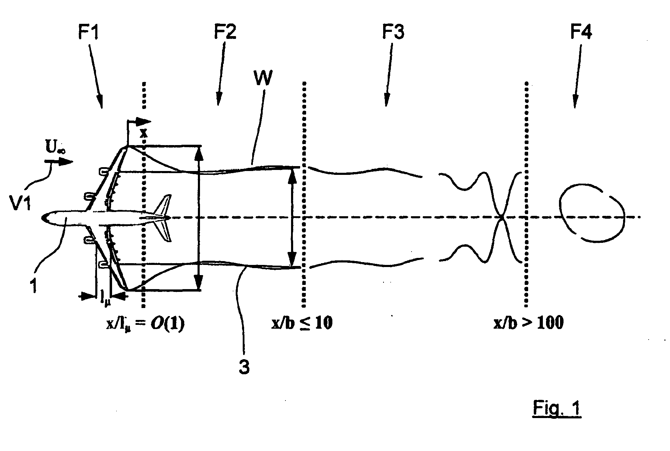

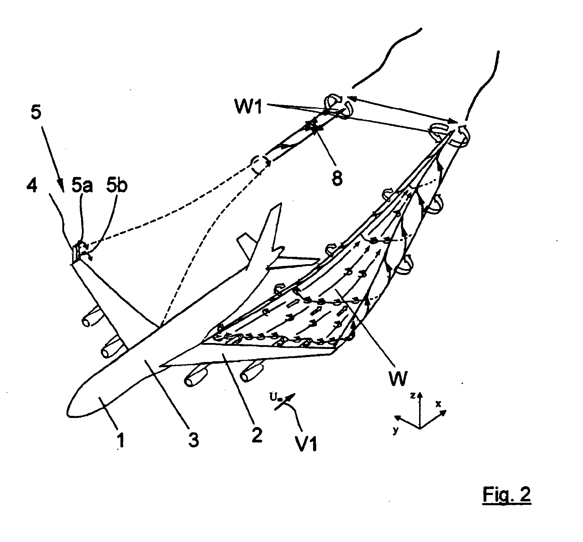

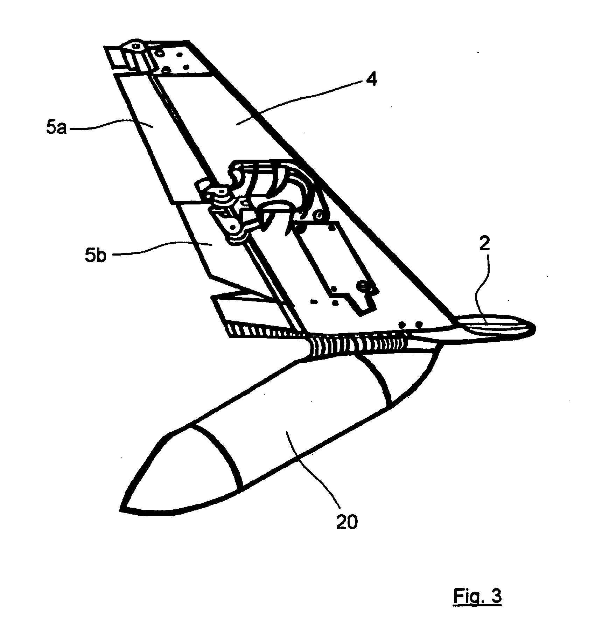

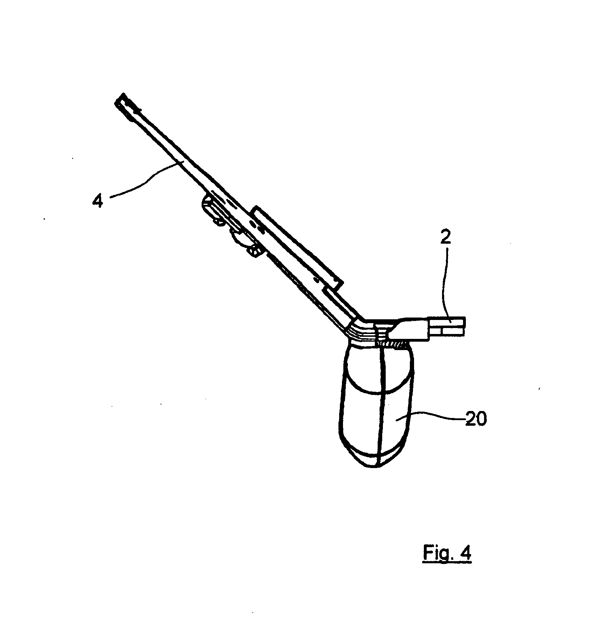

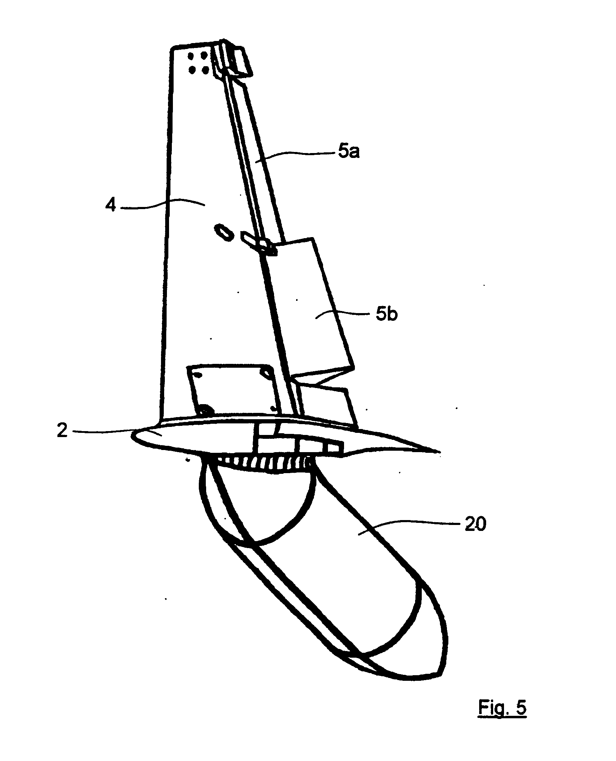

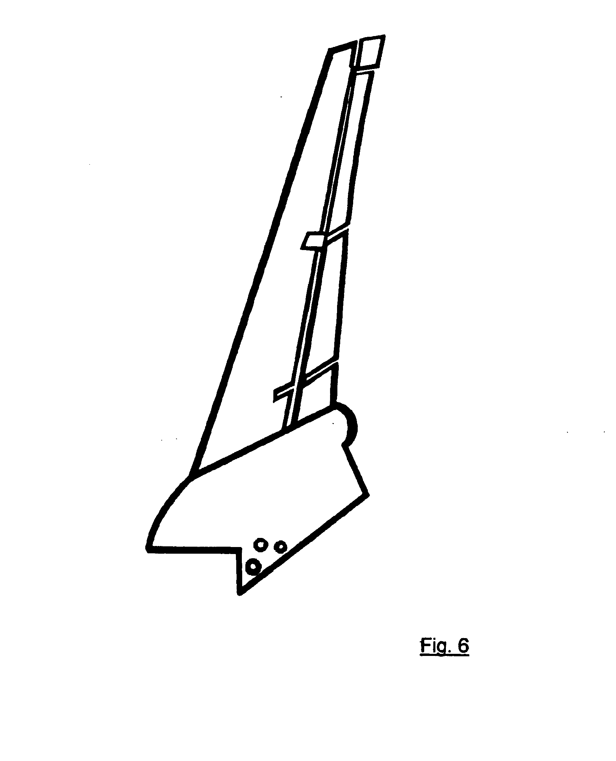

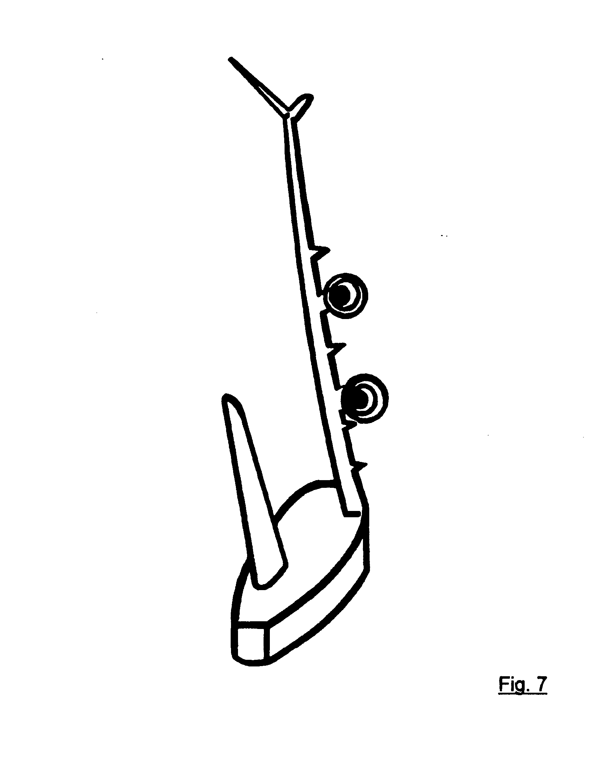

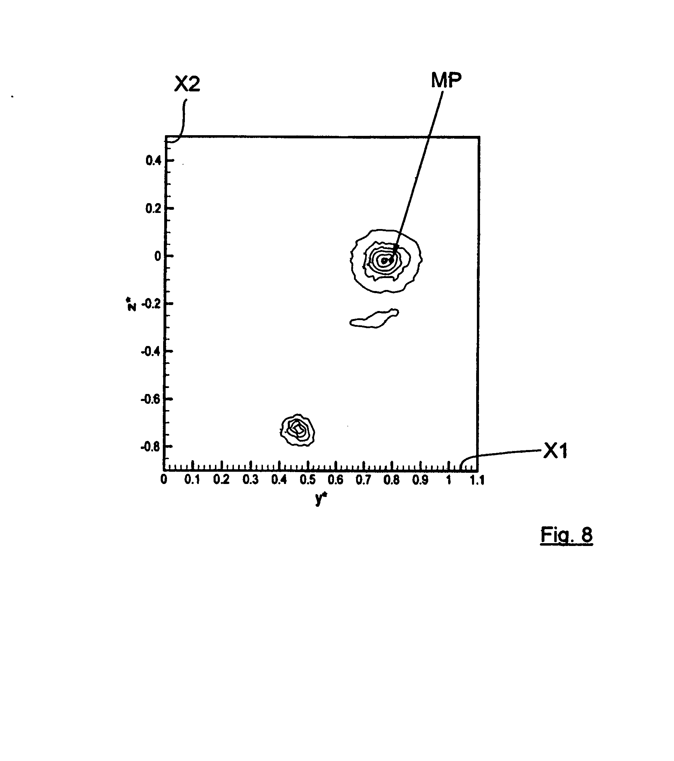

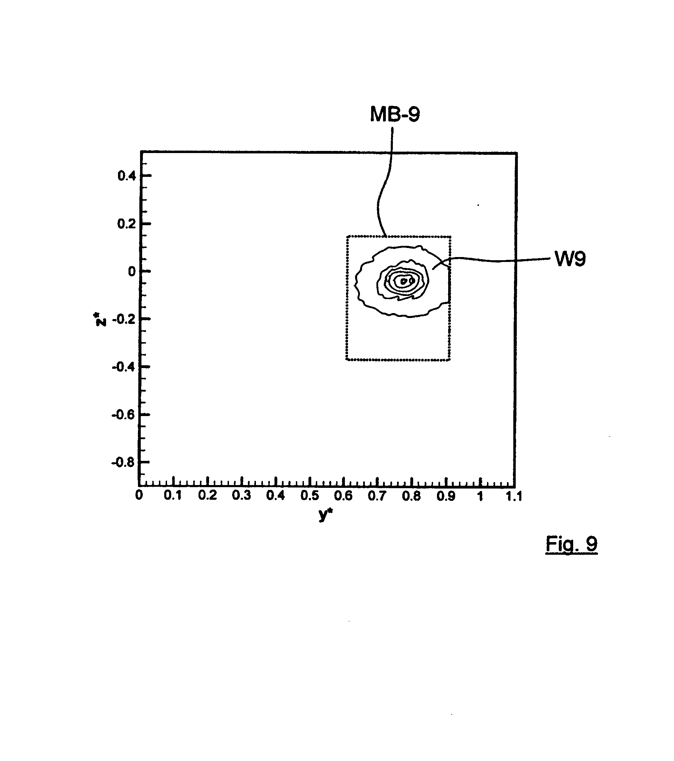

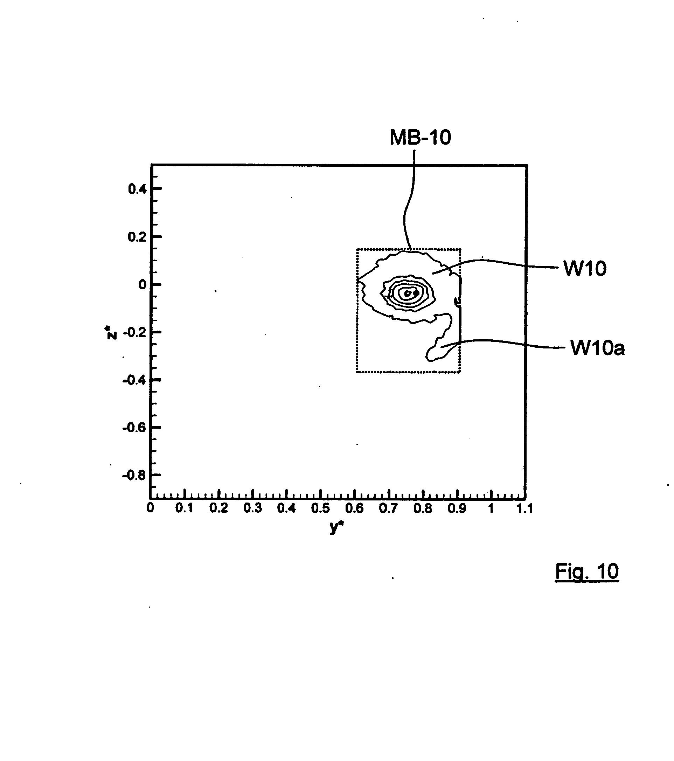

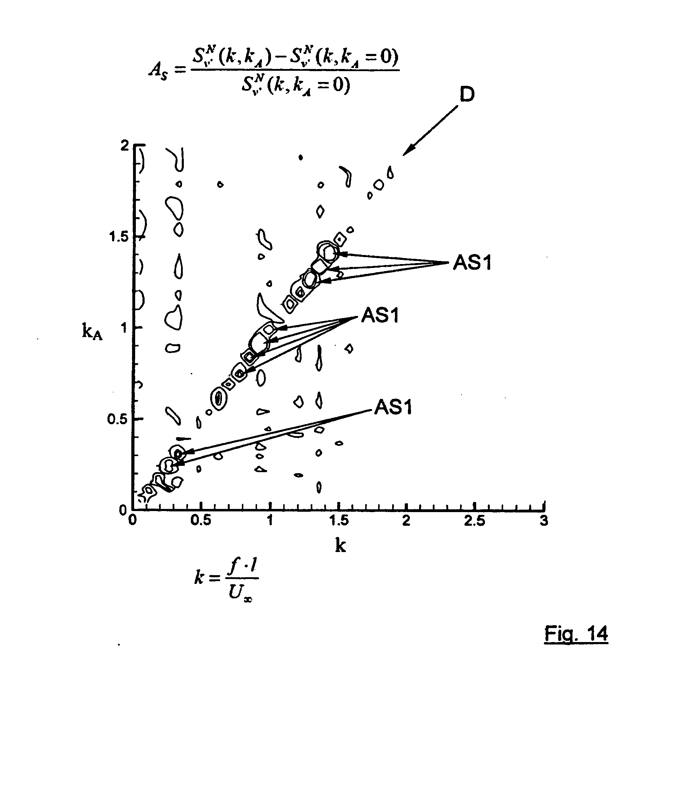

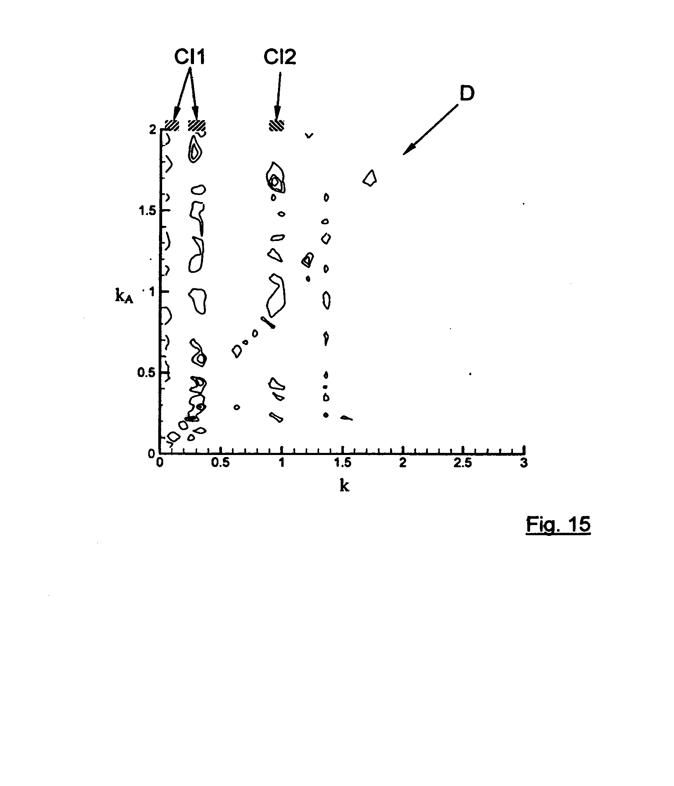

Im Folgenden wird die Erfindung an Hand der beilgefügten Figuren beschrieben, die zeigen:
■ Figur 1 von oben gesehen schematisch ein Flugzeug, das von der Umgebungsluft mit der Geschwindigkeit v1 angeströmt wird, so dass sich Wirbel oder Wirbelschleppen W ergeben;
■ Figur 2 eine perspektivische Darstellung eines Flugzeugs, das von der Umgebungsluft mit der Geschwindigkeit v1 angeströmt wird, so dass sich Wirbel oder Wirbelschleppen W ergeben;
■ Figur 3 ein erfindungsgemäßes Winglet mit zwei Strömungsklappen von außen in Richtung zum Flugzeug-Rumpf gesehen, denen jeweils ein Stellantrieb zugeordnet ist, sowie mit einem optional verwendbaren Strukturteil, in dem einer oder mehrere Stellantriebe eingebaut werden können;
■ Figur 4 das Winglet nach der Figur 3 mit dem optional verwendbaren Strukturteil und einem Teil des Haupt-Tragflügels von vorne, d.h. in Anströmungsrichtung gesehen;
■ Figur 5 eine perspektivische Darstellung des Winglet nach der Figur 3;
■ Figur 6 die Fotografie eines Modells eines Winglet zur Durchführung von Untersuchungen zu Verteilungen der Wirbelstärken bei einer typischen Konfiguration eines großen Flugzeugs und insbesondere Transportflugzeugs mit elektromotorischer Klappen-Ansteuerung, dass für Messungen entsprechend instrumentiert ist;
■ Figur 7 das Winglet der Figur 6 zusammen mit einem Tragflügel-Modell, an dem das Winglet angebracht ist;
■ Figuren 8 bis 10 die Verteilungen der dimensionslosen axialen Wirbelstärken für große Flugzeuge ohne und mit aufgeschalteter Oszillation der Winglet-Klappen bei der Stromab-Positeion x/b = 5.6, wobei die Figur 8 die Verteilungen der axialen Wirbelstärken ohne aufgeschalteter Oszillation der Winglet-Klappen, die Figuren 9 und 10 die Verteilungen der axialen Wirbelstärken mit aufgeschalteter Oszillation der Winglet-Klappen und dabei die Figur 9 den Hauptwirbelbereich bei mit kA = 0.2 (4 Hz) harmonisch schwingenden Winglet-Klappen und die Figur 10 den Hauptwirbelbereich bei mit kA = 0.6 (12 Hz) harmonisch schwingenden Winglet-Klappen darstellt;
■ in den Figuren 11 bis 13 die Ergebnisse der im Hauptwirbelbereich vorherrschenden spektralen Leistungsdichteverteilungen der Seitenwindschwankungen repräsentativ für einen ausgewählten Messpunkt in Form der spektralen Leistungsdichteverteilungen der Seitenwindschwankungen am Ort des Hauptwirbels für große Flugzeuge ohne und mit aufgeschalteter Oszillation der Winglet-Klappen, wobei die Figur 11 eine Leistungsdichteverteilung für die Referenzkonfiguration für x* = 5.60, τ* = 0.164; kA = 0, die Figur 12 die spektrale Leistungsdichteverteilung bei phasengleichem Ausschlag und die Figur 13 die spektrale Leistungsdichteverteilung bei Ausschlag mit 180 Grad Phasenverschiebung zeigt;
■ die Figuren 14 und 15 zur Verdeutlichung der Amplitudenüberhöhungen die Verteilung der bezogenen Amplitudendifferenzen AS(k;kA) zwischen dem Referenzfall (ohne Oszillation) und den Fällen mit oszillierenden Winglet-Klappen für die am Ort des Hauptwirbels der großen Transportflugzeugkonfiguration ermittelten Leistungsdichtespektren der Seitenwindschwankungen, wobei die Figur 14 die Verteilung der bezogenen Amplitudendifferenzen bei einer Oszillation der Klappen mit 0 Grad Phasenverschiebung, d.h. bei gleichsinnigem Ausschlag und die Figur 15 die Verteilung der bezogenen Amplitudendifferenzen bei einer Oszillation der Klappen mit 180 Grad Phasenverschiebung, d.h. bei gegensinnigem Ausschlag zeigt.

Erfindungsgemäß wird eine Beeinflussung des Nachlaufwirbelsystems von Flugzeugen und insbesondere von größeren Flugzeugen, wie Großraum-Flugzeugen und Transportflugzeugen. Dadurch werden insbesondere die wirbelschleppenbedingten Staffelungsabstände verringert, so dass Flugzeuge in kürzeren Zeitabständen starten und landen können. Die Figur 1 zweigt schematisch ein Flugzeug 1, das von der Umgebungsluft mit der Geschwindigkeit v1 angeströmt wird, so dass sich Wirbel oder Wirbelschleppen W ergeben. In Bezug auf die sich durch den Haupt-Tragflügel bildenden Wirbel erstreckt sich hinter einem Nahfeld oder Nahbereich F1, das bzw. der sich einen relativ kurzen Bereich hinter dem Haupt-Tragflügel 2 des Flugzeugs 1 erstreckt, ein erweitertes Nahfeld oder ein erweiterter Nahbereich F2, in denen eine Wirbelbildung und eine Wirbel-Aufrollvorgang stattfindet. In einem in Bezug auf die Flugrichtung gesehen dahinter liegenden Fernfeld oder Fernbereich F3 entwickeln sich durch überlagerte Störungen, z.B. durch atmosphärische Turbulenz, Instabilitäten. In einem Bereich F4 findet ein Zerfall der Wirbel W statt: die entstandenen Wirbelröhren kommen in Kontakt, brechen auf und bilden Wirbelringe, die schließlich zerfallen.

Zur Destabilisierung des aus dem Aufrollvorgang des Nachlaufwirbelsystems W eines Flugzeugs oder einer Flugzeugkonfiguration 1, das bzw. die mindestens aus zwei eine Spannweite umfassende Haupt-Tragflügel 2 und einem Rumpf 3 gebildet ist, resultieren Hauptwirbel W1.

Nach einem Aspekt der Erfindung ist ein aerodynamischer Körper zur Anbringung an einen Tragflügel vorgesehen, der sich in seiner Längsrichtung winklig zu der Spannweitenrichtung des Haupttragflügels erstreckt. Gemäß Figur 2 kann ein aerodynamischer Körper 4 in Form eines Winglets 4 mit zwei Winglet-Klappen 5 vorgesehen sein. Die zwei Winglet-Klappen 5 bilden ein Klappen-Paar. Erfindungsgemäß sind am stromabwärtigen Ende des aerodynamischen Körpers zumindest zwei in Längsrichtung des aerodynamischen Körpers nebeneinander angeordnete Strömungsklappen angeordnet. Die Strömungsklappen sind jeweils gegenüber einer Referenzebene oder Flügelebene des aerodynamischen Körpers bewegbar angelenkt.

Die Figuren 3 bis 5 zeigen als Beispiel der Erfindung ein an einem Tragflügel 2 angeordnetes Winglet mit einem Hauptkörper oder einem aerodynamischen Körper 4 und einer äußeren Strömungsklappe 5a und einer inneren Strömungsklappe 5b. Über ein Flügelanschluss-Stück 21 ist ein Strukturteil 20 vorgesehen, das optional vorgesehen ist. In dem Strukturteil kann insbesondere zumindest ein Stellantrieb untergebracht sein, der eine oder beide Klappen betätigt. Dabei kann insbesondere ein Stellantrieb vorgesehen sein, der über eine Kupplungsvorrichtung beide Klappen zugleich gegenphasig betätigt.

Erfindungsgemäß sind also insbesondere mehrteilige Winglet-Klappen vorgesehen. Diese sind an zumindest einen Stellantrieb oder an ein Stellantriebssystem gekoppelt und führen durch deren Betätigung harmonische oder oszillierende Schwingungen aus. Der aerodynamische Körper 4 kann insbesondere ein Winglet sein, das an der Spitze des Haupt-Tragflügels 1 angebracht ist. Auch kann der aerodynamische Körper 4 ein zwischen der Tragflügel-Wurzel und der Flügelspitze angeordnete Strömungskörper sein, wobei der Strömungskörper an der oberen Seite oder an der unteren Seite des Tragflügels angeordnet sein kann. Generell ist also ein gegenüber der Flügelebene geneigter aerodynamische Körper oder geneigtes Strömungsteil vorgesehen.

Die erfindungsgemäß harmonische oder oszillierende Schwingungen ausführenden Strömungsklappen erzeugen im Flug frequenzspezifische Geschwindigkeitsfluktuationen 7, die infolge des Aufrollvorgangs auch in den Hauptwirbel eingefüttert werden (Bereich mit Bezugszeichen 8) und verstärken dort das Niveau der Anfangsstörungen (Bereich mit Bezugszeichen 9). Dadurch werden inhärente Instabilitätsformen ausgebildet, die schließlich zum Zerfall des gesamten Wirbelsystems führen. Durch die frequenzkonditionierten Störungen wird ein beschleunigter Zerfall des Wirbelsystems erreicht.

An dem aerodynamischen Körper kann eine geradzahlige oder ungeradzahlige Anzahl von in Längsrichtung desselben nebeneinander angeordnete Strömungsklappen angeordnet sein. Insbesondere sind die Größen von zumindest zwei der aerodynamischen Körper so gewählt, dass bei phasenverschobener Oszillation von zumindest zwei der Strömungsklappen die durch diese bewegungsinduzierten Luftkräfte zu jedem Zeitpunkt unter 10 % der maximalen von einer der Strömungsklappen induzierbaren Luftkraft ist. In einem bevorzugten Ausführungsbeispiel von zwei oszillierenden Klappen bewegen sich diese vorzugsweise gegenphasig, so dass sich die induzierten Luftkräfte zu jedem Zeitpunkt der Schwingungsperiode weitgehend aufheben. Dadurch wird die zeitliche Änderung der integralen aerodynamischen Reaktionen sehr gering oder sogar verhindert. Bei einer ungeradzahligen Anzahl von Klappen werden diese oszillierend derart bewegt, dass diese in jedem Zeitpunkt möglichst oder verhältnismäßig geringe Kräfte auf die Flügelstruktur ausüben.

Die am aerodynamischen Körper angeordneten Strömungsklappen können verschiedenartig ausgestaltet sein und z.B. direkt nebeneinander angeordnet sein, d.h. ohne dass ein Strukturteil zwischen den Strömungsklappen gelegen ist. Alternativ kann auch ein Strukturteil zwischen den Strömungsklappen gelegen sein.

Den Strömungsklappen des aerodynamischen Körpers kann zumindest ein Stellantrieb zugeordnet sein, der mehrere oder jede der Strömungsklappen von einer Nullstellung verstellen kann. Das heißt, dass mehrere und zumindest zwei der Strömungsklappen des aerodynamischen Körpers miteinander mechanisch gekoppelt sind und mit diesen Strömungsklappen ein Stellantrieb zu deren Betätigung z.bl mittels einer Kupplungsvorrichtung und/oder eines Getriebes derart gekoppelt ist, dass eine Betätigungsbewegung des Stellantriebs gleichzeitig phasenverschobene Bewegungen der Strömungsklappen oder gegenphasige Bewegungen bewirkt. Insbesondere kann jeder der Strömungsklappen des aerodynamischen Körpers jeweils ein Stellantrieb zugeordnet sein, der jeden der Strömungsklappen von einer Referenzstellung ausgehend in beide entgegengesetzt zueinander verlaufenden Richtungen verstellen kann.

Generell kann als Referenzstellung die Neutralstellung der jeweiligen Strömungsklappe am aerodynamischen Körper oder eine Stellung der jeweiligen Strömungsklappe am aerodynamischen Körper verstanden werden, bei der der Widerstand des aerodynamischen Körpers maximal 10 % des minimalen Widerstandswertes ist. Diese Maßzahl gilt für den Fall, das die weiteren Strömungsklappen nicht betätigt werden, d.h. unverändert bleiben. Bei den am aerodynamischen Körper angeordneten Strömungsklappen sind Klappenausschläge ausgehend von der Referenzstellung zwischen 10 Grad und 40 Grad und vorzugsweise zwischen 15 Grad und 25 Grad in beiden Richtungen vorgesehen.

Der aerodynamische Körper kann also ein an der Spitze des Hauptflügels angeordnetes Winglet oder im Bereich zwischen der Flügelwurzel und der Flügelspitze des Hauptflügels angeordnet sein und der Winkel zwischen der Längsrichtung des aerodynamischen Körpers und der Spannweitenrichtung des Haupttragflügels kann 90 Grad betragen oder zwischen 45 Grad und 90 Grad liegen.

Im aerodynamischen Körper kann zumindest ein Stellantrieb zur Betätigung der zumindest zwei Strömungsklappen oder im aerodynamischen Körper zur Betätigung der zumindest zwei Strömungsklappen für jede Strömungsklappe jeweils ein Stellantrieb angeordnet sein. Alternativ oder zusätzlich kann im aerodynamischen Körper ein Computer zur Ansteuerung des zumindest einen Stellantriebs angeordnet sein.

Weiterhin kann nach der Erfindung ein Computer mit einem Stellantriebs-Ansteuermodul, das zeitveränderliche Kommandosignale für Stellantriebe generiert, wobei das Stellantriebs-Ansteuermodul eine Funktion aufweist, die aufgrund ihrer Aktivierung zumindest zwei oszillatorische Kommandosignale an jeweils einen Stellantrieb generiert, die zueinander gegenphasig sind, vorgesehen sein. Auch kann die Funktion aufweisen, die aufgrund ihrer Aktivierung zumindest drei oszillatorische Kommandosignale generiert, von denen jedes an jeweils einen Stellantrieb zu senden ist, wobei die oszillatorischen Kommandosignale zueinander phasenverschoben sind.

In diesen Fällen kann eine Funktion zur Veränderung der Frequenz und/oder Amplitude des oszillatorischen Kommandosignals in dem Computer implementiert sein, die kumultativ oder alternativ aufweisen kann:
■ eine Rampenfunktion, die die Frequenz und/oder Amplitude in einem vorgegebenen Zeitabschnitt kontinuierlich erhöht oder absenkt;
■ einen Zufallsgenerator, der die Frequenz und/oder Amplitude für einen vorgegebenen Zeitabschnitt oder der Frequenzen und/oder Amplituden für einen vorgegebenen Zeitabschnitt festsetzt, wobei der Zufallsgenerator zusätzlich die Größe des Zeitabschnitts festlegen kann;
■ einen Generator zur Erzeugung eines weißen Rauschens.

Diese Funktionen können insbesondere dem oszillierenden Kommandosignal aufgeschaltet werden.

Bei dem Computer können die Frequenzen innerhalb einer vorgegebenen Bandbreite in einem vorgegebenen Zeitabschnitt nach einer Normalverteilung erzeugt werden. Die genannten Funktionen können auch alsComputerprogramm zur Implementierung in einen Computer mit einem Stellantriebs-Ansteuermodul vorgesehen sein.

Weiterhin ist ein Verfahren zur Beeinflussung von Kommandosignalen für ein Stellantriebssystem mit den Schritten vorgesehen:
■ Erzeugung von Ansteuerungssignalen für einen Stellantrieb,
■ Veränderung der Ansteuerungssignale derart, dass zumindest zwei oszillatorische Kommandosignale für jeweils einen Stellantrieb generiert werden, die zueinander gegenphasig sind.

Dabei können zumindest zwei oszillatorische Kommandosignale für jeweils einen Stellantrieb generiert werden, die zueinander phasenverschoben sind. Auch können nach oder vor Erzeugung der oszillatorischen Kommandosignale die Frequenz und/oder Amplitude jedes oszillatorischen Kommandosignals verändert werden. Insbesondere kann die Veränderung der Frequenz und/oder Amplitude der oszillierenden Kommandosignale durch eine Rampenfunktion vorgenommen werden, die die Frequenz und/oder Amplitude in einem vorgegebenen Zeitabschnitt kontinuierlich erhöht oder absenkt.

Bei dem erfindungsgemäßen Verfahren können die bei der Beschreibung des erfindungsgemäßen Computers genannten Funktionen vorgesehen sein.

Die Ermittlung der Frequenzen der nach der Erfindung vorgesehenen oszillierenden Schwingungen erfolgt vorzugsweise experimentell, so dass die erfindungsgemäß verwendeten Frequenzen und/oder Amplituden erfindungsgemäße angewendet werden können. Nachfolgend wird die Ermittlung der Frequenzen und/oder Amplituden beschrieben:
Die Frequenzen der harmonischen oder oszillierenden Klappenschwingungen sind auf die dem Nachlaufwirbelsystem inhärenten Instabilitätsformen mit der größten Anfachungsrate abgestimmt. Diese Frequenzen können experimentell ermittelt werden, um die dem den Strömungsklappen zugeordneten Stellantrieb mit den entsprechenden Frequenzen anzusteuern bzw. zu betätigen.

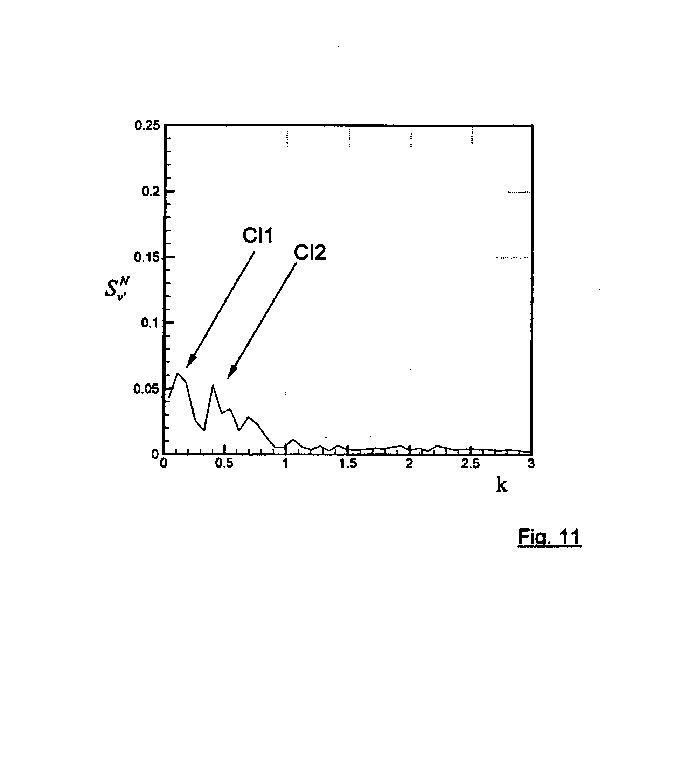

Zur Durchführung der Untersuchungen an einem Modell einer typischen großen Transportflugzeugkonfiguration, eines Strömungskörpers oder Winglets oder einer Kombination aus einem Haupt-Tragflügel mit einem Strömungskörper kann ein solcher Strömungskörper mit elektromotorischer Klappenansteuerung verwendet werden, dass entsprechend instrumentiert ist. In den Figuren 6 und 7 ist ein solches Modell eines Tragflügels mit einem Winglet bzw. ein Winglet dargestellt. Die Klappengrößen z.B. eines Strömungskörpers mit zwei Klappen können so gewählt werden, dass sich bei gegenphasiger Oszillation die bewegungsinduzierten Luftkräfte zu jedem Zeitpunkt der Schwingungsperiode gerade aufheben. Bei einem solchen Modell befindet sich der Antrieb aus Platzgründen vorzugsweise in einem externen Gehäuse an der Flügelspitze. Die Konstanz der aerodynamischen Gesamtbeiwerte kann insbesondere durch Waagenmessungen überprüft werden. Für den Modellversuch betragen die maximal möglichen Klappenausschläge der inneren und äußeren Klappe z.B. jeweils ± 20°. Die Schwingungsfrequenz lässt sich im Bereich von 0 -100 Hz einstellen. Die Beeinflussung der Wirbel bei einer Anströmung des Strömungskörpers oder des Tragflügels mit einem Strömungskörper zielt auf den dabei entstehenden energiereichen Flügelspitzenwirbel ab, dem durch die Bewegung der Klappen frequenzkonditionierte Fluktuationen aufgeprägt werden, um stromab bei der Wechselwirkung und Verschmelzung mit den weiteren dominierenden Einzelwirbein (Klappenwirbel und Triebwerksgondelwirbel) eine erhöhte Anfachung der Instabilitätsformen einzuleiten. Die Verteilungen der zeitlich gemittelten dimensionslosen axialen Wirbelstärken in der am weitesten stromab betrachteten Nachlaufebene bei 5.6 Spannweiten stellen die Figuren 8 bis 15 dar. Die Figuren 8 bis 10 stellen die Verteilungen der dimensionslosen axialen Wirbelstärken für die Konfiguration großer Flugzeuge ohne und mit aufgeschalteter Oszillation der Winglet-Klappen bei der Stromabposition x/b=5.6 dar. Die Figur 8 zeigt ein Diagramm mit der X1-Achse, auf der die axialen Wirbelstärken aufgetragen sind und mit der X2-Achse, auf der die Verteilung der Leistungsstärken aufgetragen ist. In der Figur 8 ist der Referenzfall gezeigt, d.h. ohne aktive Beeinflussung durch Bewegungen der Klappen. Das Leistungsspektrum des in der Figur 8 gezeigten Messpunktes mit dem Bezugszeichen ist in den Figuren 11 bis 13 dargestellt. In der Figur 9 ist der Hauptwirbel W9 eines Messbereichs MB9 für die mit kA = 0.2 (4 Hz) harmonisch schwingenden Winglet-Klappen und in der Figur 10 ist der Hauptwirbel W10 eines Messbereichs MB10 sowie der flügelspitzenwirbel W10a für die mit kA = 0.6 (12 Hz) harmonisch schwingenden Winglet-Klappen dargestellt. Die Fälle mit oszillierenden Klappen präsentieren in den zeitlichen Mittelwerten eine dem Referenzfall ähnliche Verteilungsstruktur und vergleichbare Spitzenwerte. Eine genauere Betrachtung lasst aber bereits eine Variation in der bezogenen spannweitigen Lage des Hauptwirbels von 3% bis 4% sowie topologische Unterschiede erkennen.

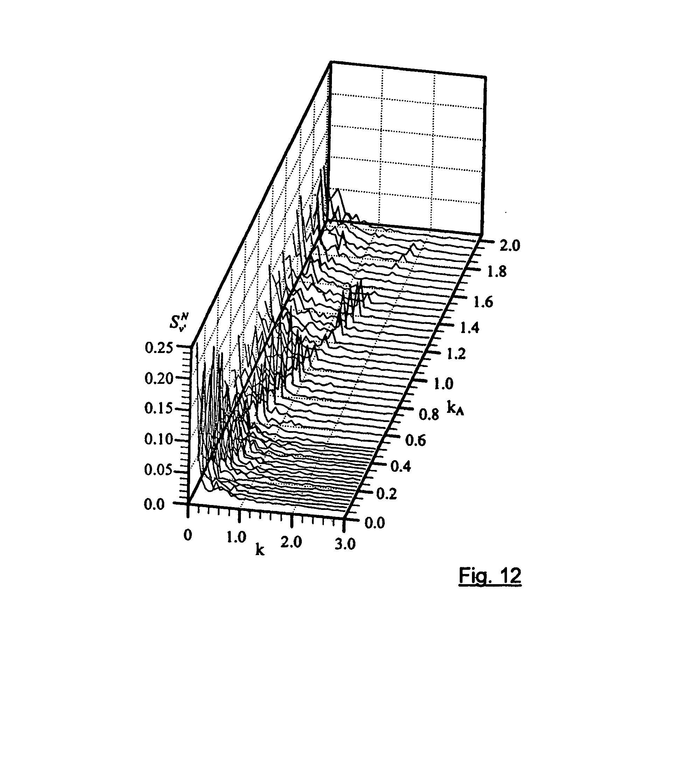

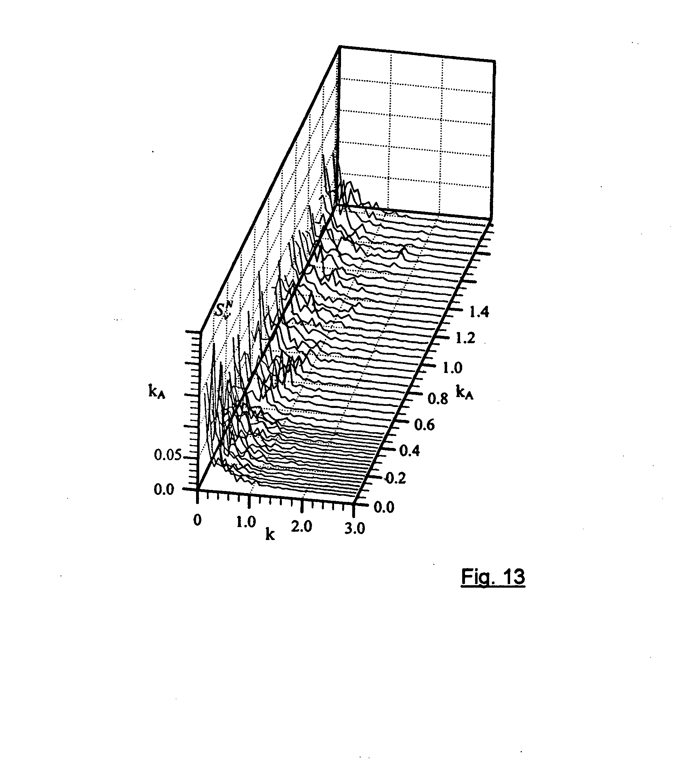

In den Figuren 11 bis 13 werden die Ergebnisse der im Hauptwirbelbereich vorherrschenden spektralen Leistungsdichteverteilungen der Seitenwindschwankungen repräsentativ für einen ausgewählten Messpunkt dargestellt. Für den Referenzfall zeichnen sich Amplitudenüberhöhungen im Bereich der reduzierten Frequenzen für die sogenannte Crow- Instabilität CI1 und die sogenannte Crouch-Instabilität CI2 ab (Figur 11 mit Referenzkonfiguration; x* = 5.60, τ* = 0.164; kA = 0). Die Aufschaltung der oszillierenden Winglet-Klappen äußert sich in einem erheblichen frequenzspezifischen Energieeintrag, wie die Staffeldarstellungen der Leistungsdichtespektren der Figuren 12 und 13 bei Variation der Anregefrequenz kA erkennen lassen. Figur 12 zeigt das Leistungsspektrum bei einem phasengleichen Ausschlag und Figur 13 zeigt das Leistungssektrum mit 180 Grad Phasenverschiebung der Klappen. Dies bedeutet, dass die im Winglet-Nachlauf erzwungenen harmonischen Geschwindigkeitsänderungen sich durch Induktion auch den Geschwindigkeitsschwankungen im Hauptwirbelbereich aufprägen. Dabei kennzeichnen die Leistungswerte entlang der Diagonalen k = kA den Energieeintrag bei der jeweiligen Anregefrequenz. Der oszillierende Nachlauf führt vor allem auch in den Frequenzbereichen zu signifikanten Amplitudenüberhöhungen, die den Instabilitätsformen zugeordnet sind.

Um die Amplitudenüberhöhungen zu verdeutlichen, wird die bezogene Differenz der spektralen Leistungsdichteverteilungen zwischen den Fällen mit Oszillation und dem Referenzfall ohne Klappenschwingung ausgewertet. Diese Auswertung ist in den Figuren 14 und 15 dargestellt. Die Ergebnisse für den gleichsinnigen Ausschlag lassen entlang der Diagonalen (Richtung D) Amplitudenunterschiede mit Spitzenwerten k = kA von bis zu 20 erkennen, die sich gemäß der Anregung von Instabilitätsformen in charakteristische Gruppen lokaler Maxima untergliedern. Der gegensinnige Ausschlag gibt diese Trends in angeschwächtem Maße wieder. Jedoch treten für spezifische Bänder k = konstant an den Stellen AS1 deutliche Amplitudenüberhöhungen von AS = 2 - 4 über einen weiten Frequenzbereich der Anregung auf.

Lokale Maxima informieren über die reduzierten Frequenzwerte mit besonders starker Amplitudenüberhöhung und untermauern damit das Potenzial einer aktiven Anregung inhärenter Instabilitäten.

## Patentansprüche

1. Aerodynamischer Körper (4) zur Anbringung an einen Tragflügel, der sich in seiner Längsrichtung winklig zu der Spannweitenrichtung des Haupttragflügels (2) erstreckt,
**dadurch gekennzeichnet,**
**dass** am stromabwärtigen Ende des aerodynamischen Körpers (4) zumindest zwei in Längsrichtung des aerodynamischen Körpers (4) nebeneinander angeordnete Strömungsklappen (5; 5a, 5b) angeordnet sind.

2. Aerodynamischer Körper (4) nach dem Anspruch 1, **dadurch gekennzeichnet, dass** die Strömungsklappen (5; 5a, 5b) direkt nebeneinander angeordnet oder derart angeordnet sind, dass zwischen den Strömungsklappen (5; 5a, 5b) ein Strukturteil gelegen ist.

3. Aerodynamischer Körper (4) nach einem der vorangehenden Ansprüche, **dadurch gekennzeichnet, dass** die Größen von zumindest zwei der Strömungsklappen (5; 5a, 5b) so gewählt sind, dass sich bei phasenverschobener Oszillation von zumindest zwei der Strömungsklappen (5; 5a, 5b) die durch diese bewegungsinduzierten Luftkräfte zu jedem Zeitpunkt unter 10 % der maximalen von einer der Strömungsklappen induzierbaren Luftkraft ist.

4. Aerodynamischer Körper (4) nach einem der vorangehenden Ansprüche, **dadurch gekennzeichnet, dass** sich bei gegenphasiger Oszillation von zumindest zwei der Strömungsklappen (5; 5a, 5b) die durch diese Strömungsklappen (5; 5a, 5b) bewegungsinduzierten Luftkräfte zu jedem Zeitpunkt der Schwingungsperiode gerade aufheben.

5. Aerodynamischer Körper (4) nach einem der vorangehenden Ansprüche, **dadurch gekennzeichnet, dass** den Strömungsklappen(5; 5a, 5b) des aerodynamischen Körpers (4) zumindest ein Stellantrieb zugeordnet ist, der mehrere oder jede der Strömungsklappen (5; 5a, 5b) von einer Nullstellung verstellen kann.

6. Aerodynamischer Körper (4) nach dem Anspruch 5, **dadurch gekennzeichnet, dass** im aerodynamischen Körper (4) ein Computer zur Ansteuerung des zumindest einen Stellantriebs angeordnet ist.

7. Aerodynamischer Körper (4) nach einem der vorangehenden Ansprüche, **dadurch gekennzeichnet, dass** zumindest zwei der Strömungsklappen (5; 5a, 5b) des aerodynamischen Körpers (4) miteinander mechanisch gekoppelt sind und mit diesen Strömungsklappen (5; 5a, 5b) ein Stellantrieb zu deren Betätigung derart gekoppelt ist, dass eine Betätigungsbewegung des Stellantriebs gleichzeitig phasenverschobene Bewegungen der Strömungsklappen (5; 5a, 5b) oder gegenphasige Bewegungen bewirkt.

8. Aerodynamischer Körper (4) nach einem der vorangehenden Ansprüche, **dadurch gekennzeichnet, dass** der aerodynamische Körper (4) ein an der Spitze des Hauptflügels (2) anordnungsbares Winglet (4) ist.

9. Aerodynamischer Körper (4) nach einem der vorangehenden Ansprüche 1 bis 7, **dadurch gekennzeichnet, dass** der aerodynamische Körper (4) im Bereich zwischen der Flügelwurzel und der Flügelspitze des Hauptflügels (2) anordnungsbar ist.

10. Tragflügel mit einem Haupttragflügel (2) und zumindest einem zusätzlichen aerodynamischen Körper (4), der nach einem der vorangehenden Ansprüche 1 bis 9 gestaltet ist.

11. Tragflügel nach dem Anspruch 10, **dadurch gekennzeichnet, dass** im aerodynamischen Körper (4) zumindest ein Stellantrieb zur Betätigung jeweils einer oder mehrerer der zumindest zwei Strömungsklappen (5; 5a, 5b) angeordnet ist.

12. Tragflügel nach dem Anspruch 11, **dadurch gekennzeichnet, dass** im aerodynamischen Körper (4) ein Computer zur Ansteuerung des zumindest einen Stellantriebs angeordnet ist.

13. Tragflügel nach dem Anspruch 12, **dadurch gekennzeichnet, dass** der Computer ein Stellantriebs-Ansteuermodul aufweist, das zeitveränderliche Kommandosignale zur Übermittlung an zumindest einen Stellantrieb generiert, wobei das Stellantriebs-Ansteuermodul eine Funktion aufweist, die aufgrund ihrer Aktivierung zumindest zwei oszillatorische Kommandosignale generiert, von denen jeweils eines an jeweils einen einem aerodynamischen Körper zugeordneten Stellantrieb gesendet wird, wobei die Kommandosignale zueinander phasenverschoben sind.

14. Tragflügel nach dem Anspruch 13, **dadurch gekennzeichnet, dass** das Stellantriebs-Ansteuermodul eine Funktion zur Veränderung der Frequenz und/oder Amplitude des oszillatorischen Kommandosignals ist.

15. Tragflügel nach dem Anspruch 14, **dadurch gekennzeichnet, dass** die Funktion zur Veränderung der Frequenz und/oder Amplitude der oszillierenden Kommandosignale einen Zufallsgenerator aufweist, der die Frequenz und/oder Amplitude für einen vorgegebenen Zeitabschnitt oder der Frequenzen und/oder Amplituden für einen vorgegebenen Zeitabschnitt festsetzt.

## Claims

1. An aerodynamic body (4) for attachment to a wing, which extends in its longitudinal direction at an angle to the spanwise direction of the primary wing (2),
**characterized in that**,
at the downstream end of the aerodynamic body (4) at least two flow flaps (5; 5a, 5b) are arranged situated next to each other in the longitudinal direction of the aerodynamic body (4).

2. The aerodynamic body (4) according to claim 1, **characterized in that** the flow flaps (5; 5a, 5b) are arranged directly adjacent to each other or are arranged such that a structural element is located between the flow flaps (5; 5a, 5b).

3. The aerodynamic body (4) according to any of the preceding claims, **characterized in that** the dimensions of at least two of the flow flaps (5; 5a, 5b) are selected such that in the case of a phase-shifted oscillation of at least two of the flow flaps (5; 5a, 5b) the air forces motion-induced by them are at any point in time below 10% of the maximum air force which can be induced by one of the flow flaps.

4. The aerodynamic body (4) according to any of the preceding claims, **characterized in that** in case of an oscillation opposite in phase of at least two of the flow flaps (5; 5a, 5b) the air forces motion-induced by these flow flaps (5; 5a, 5b) are just canceling each other at any point in the oscillation period.

5. The aerodynamic body (4) according to any of the preceding claims, **characterized in that** at least one actuator is associated with the flow flaps (5; 5a, 5b) of the aerodynamic body (4), which at least one actuator is able to displace several or each of the flow flaps (5; 5a, 5b) from a zero setting.

6. The aerodynamic body (4) according to claim 5, **characterized in that** a computer for controlling the at least one actuator is disposed in the aerodynamic body (4).

7. The aerodynamic body (4) according to any of the preceding claims, **characterized in that** at least two of the flow flaps (5; 5a, 5b) of the aerodynamic body (4) are mechanically coupled to each other, and an actuator for their actuation is coupled to these flow flaps (5; 5a, 5b) in such a manner that an actuation motion of the actuator simultaneously causes phase-shifted motions of the flow flaps (5; 5a, 5b) or motions opposite in phase.

8. The aerodynamic body (4) according to any of the preceding claims, **characterized in that** the aerodynamic body (4) is a winglet (4) which can be arranged at the tip of the primary wing (2).

9. The aerodynamic body (4) according to any of the preceding claims 1 to 7, characterized that the aerodynamic body (4) can be arranged in the region between the wing root and the wing-tip of the primary wing (2).

10. A wing having a primary wing (2) and at least one additional aerodynamic body (4) which is configured according to any of the preceding claims 1 to 9.

11. The wing according to claim 10, **characterized in that** at least one actuator for actuation of in each case one or several of the at least two flow flaps (5; 5a, 5b) is disposed in the aerodynamic body (4).

12. The wing according to claim 11, **characterized in that** a computer for controlling the at least one actuator is disposed in the aerodynamic body (4).

13. The wing according to claim 12, **characterized in that** the computer comprises an actuator control module which generates time variable command signals for transmission to at least one actuator, wherein the actuator control module comprises a function which, due to its activation, generates at least two oscillatory command signals, of which, respectively, one is transmitted to a respective actuator associated with an aerodynamic body, wherein the command signals are phase-shifted with respect to each other.

14. The wing according to claim 13, **characterized in that** the actuator control module is a function for modifying the frequency and/or the amplitude of the oscillatory command signal.

15. The wing according to claim 14, **characterized in that** the function for modifying the frequency and/or amplitude of the oscillatory command signals comprises a random number generator which sets the frequency and/or amplitude for a predetermined time period or the frequencies and/or amplitudes for a predetermined time period.

## Revendications

1. Corps aérodynamique (4) destiné à être installé sur une aile portante, qui s'étend dans son sens longitudinal de manière à former un angle avec le sens de l'envergure de l'aile portante principale (2),
**caractérisé en ce que**
à l'extrémité aval du corps aérodynamique (4), sont disposés au moins deux volets (5; 5a, 5b) placés côte à côte dans le sens longitudinal du corps aérodynamique (4).

2. Corps aérodynamique (4) selon la revendication 1, **caractérisé en ce que** les volets (5; 5a, 5b) sont disposés directement côte à côte ou sont disposés de telle façon qu'un élément structural se trouve entre les volets (5; 5a, 5b).

3. Corps aérodynamique (4) selon l'une des revendications précédentes, **caractérisé en ce que** les dimensions d'au moins deux des volets (5; 5a, 5b) sont choisies telles qu'en cas d'oscillation déphasée d'au moins deux des volets (5; 5a, 5b), les forces aérodynamiques induites par le mouvement de ceux-ci soient à chaque instant inférieures à 10 % de la force aérodynamique maximale pouvant être induite par l'un des volets.

4. Corps aérodynamique (4) selon l'une des revendications précédentes, **caractérisé en ce qu'**en cas d'oscillation en opposition de phase d'au moins deux des volets (5; 5a, 5b), les forces aérodynamiques induites par le mouvement de ces volets (5; 5a, 5b) s'annulent juste à chaque instant de la période d'oscillation.

5. Corps aérodynamique (4) selon l'une des revendications précédentes, **caractérisé en ce qu'**est associée aux volets (5; 5a, 5b) du corps aérodynamique (4), au moins une servocommande qui peut déplacer plusieurs volets ou chacun des volets (5; 5a, 5b) à partir d'une position neutre.

6. Corps aérodynamique (4) selon la revendication 5, **caractérisé en ce qu'**un ordinateur, destiné à activer la servocommande, au nombre d'au moins une, est disposé dans le corps aérodynamique (4).

7. Corps aérodynamique (4) selon l'une des revendications précédentes, **caractérisé en ce qu'**au moins deux des volets (5; 5a, 5b) du corps aérodynamique (4) sont couplés mécaniquement l'un à l'autre et qu'une servocommande est couplée à ces volets (5; 5a, 5b), en vue de leur actionnement, de telle façon qu'un mouvement d'actionnement de la servocommande provoque simultanément des mouvements déphasés des volets (5; 5a, 5b) ou des mouvements en opposition de phase.

8. Corps aérodynamique (4) selon l'une des revendications précédentes, **caractérisé en ce que** le corps aérodynamique (4) est une ailette de bout d'aile (4) pouvant être disposée sur le bout de l'aile principale (2).

9. Corps aérodynamique (4) selon l'une des revendications précédentes 1 à 7, **caractérisé en ce que** le corps aérodynamique (4) peut être disposé dans la région entre l'emplanture d'aile et le bout d'aile de l'aile principale (2).

10. Aile portante comprenant une aile principale (2) et au moins un corps aérodynamique (4) supplémentaire qui est agencé selon l'une des revendications précédentes 1 à 9.

11. Aile portante selon la revendication 10, **caractérisée en ce qu'**est disposée dans le corps aérodynamique (4), au moins une servocommande destinée à actionner respectivement un ou plusieurs des volets (5; 5a, 5b), au nombre d'au moins deux.

12. Aile portante selon la revendication 11, **caractérisée en ce qu'**un ordinateur, destiné à activer la servocommande, au nombre d'au moins une, est disposé dans le corps aérodynamique (4).

13. Aile portante selon la revendication 12, **caractérisée en ce que** l'ordinateur présente un module d'activation de servocommande qui génère des signaux de commande variables dans le temps, en vue de les transmettre à au moins une servocommande, le module d'activation de servocommande présentant une fonction qui, en raison de son activation, génère au moins deux signaux de commande oscillatoires, parmi lesquels chaque fois un est envoyé respectivement à une servocommande associée à un corps aérodynamique, les signaux de commande étant déphasés les uns par rapport aux autres.

14. Aile portante selon la revendication 13, **caractérisée en ce que** le module d'activation de servocommande est une fonction pour modifier la fréquence et/ou l'amplitude du signal de commande oscillatoire.

15. Aile portante selon la revendication 14, **caractérisée en ce que** la fonction pour modifier la fréquence et/ou l'amplitude des signaux de commande oscillatoires présente un générateur aléatoire qui fixe la fréquence et/ou l'amplitude pour un intervalle de temps prédéterminé, ou qui fixe des fréquences et/ou des amplitudes pour un intervalle de temps prédéterminé.
